# NEUE EUROPÄISCHE PATENTSCHRIFT

(11) **EP 3 135 511 B2**
(45) Veröffentlichungstag und Bekanntmachung des Hinweises auf die Entscheidung über den Einspruch: **14.02.2024**
(45) Hinweis auf die Patenterteilung: 10.03.2021
(21) Anmeldenummer: 16185079.7
(22) Anmeldetag: 22.08.2016
(51) Int. Cl.: B60D 1/48, B60D 1/06

(54) **ZUGEINRICHTUNG**
TRACTION DEVICE
DISPOSITIF DE TRACTION

(30) Priorität: 25.08.2015 DE 202015104491 U
(43) Veröffentlichungstag der Anmeldung: 01.03.2017
(73) Patentinhaber: Alois Kober GmbH, 89359 Kötz (DE)
(72) Erfinder: Winter, Ralf, 49179 Ostercappeln (DE); Leinker, Dirk, 49152 Bad Essen (DE)
(74) Vertreter: Ernicke, Klaus Stefan

(56) Entgegenhaltungen:
- EP-A1- 2 508 367
- DE-A1-102009 035 334
- NZ-A- 579 770
- US-B1- 7 021 646

## Beschreibung

Die Erfindung betrifft eine Zugeinrichtung für ein Fahrzeug mit den Merkmalen im Oberbegriff des Hauptanspruchs.

Praxisbekannte Zugeinrichtungen zum Anbau an Kraftfahrzeugen, z.B. Wohnmobilen, weisen einen Querträger mit einer Zugkupplung und mit angeschweißten Anbaubeschlägen zur Befestigung an den Längsträgern des Fahrzeugchassis auf. Die Zugeinrichtung ist auf das jeweilige Kraftfahrzeug oder Zugfahrzeug adaptiert, wobei Anpassungen an allen Komponenten der Zugeinrichtung vorgenommen werden. Die Dokumente DE 10 2009 0535334 A1 und NZ 579 770 A offenbaren jeweils eine Zugeinrichtung gemäß dem Oberbegriff des Anspruchs 1.

Es ist Aufgabe der vorliegenden Erfindung, eine verbesserte Zugeinrichtung aufzuzeigen.

Die Erfindung löst diese Aufgabe mit den Merkmalen im Hauptanspruch.
Die beanspruchte Zugeinrichtung ist für ein Fahrzeug, insbesondere Straßenfahrzeug, vorgesehen und weist eine Zugkupplung, einen Querträger, Anbaubeschläge zum Anbau des Querträgers am Fahrzeug und eine Montageeinheit zur Montage der Zugkupplung am Querträger auf. Ferner weist die Zugeinrichtung eine Anbauschnittstelle auf, die für einen variablen Anbau des Querträgers, insbesondere in unterschiedlichen axialen Drehstellungen, an den Anbaubeschlägen vorgesehen und ausgebildet ist. Die Zugeinrichtung weist auch eine Montageschnittstelle auf, die für eine variable Montage der Zugkupplung in unterschiedlichen Drehstellungen am Querträger vorgesehen und ausgebildet ist, wobei die Montageposition der Zugkupplung am Querträger bedarfsweise variiert werden kann.

Die Zugeinrichtung weist eine einfach oder mehrfach abgewinkelte Kupplungsstange, nämlich eine Kugelstange, mit einem Kupplungskopf, nämlich einem Kugelkopf, auf. Die Kupplungsstange und der Kupplungskopf können einstückig ausgebildet sein. Die Zugkupplung kann eine feste oder bewegliche, insbesondere abnehmbare, Kupplungsstange aufweisen.

Die beanspruchte Zugeinrichtung hat verschiedene Vorteile. Einerseits können mit sehr geringem Bau- und Kostenaufwand eine Vielzahl unterschiedlichster Konfigurationen der Zugeinrichtung aus wenigen Komponenten hergestellt werden. Die Position der Zugkupplung, insbesondere deren Höhenlage und/oder Längsposition am Fahrzeugheck sowie deren Auskraglänge nach hinten, kann sehr feinfühlig an die variierenden baulichen Gegebenheiten unterschiedlicher Kraftfahrzeuge, insbesondere Nutzfahrzeuge oder Wohnmobile, angepasst werden. Die beanspruchte Zugeinrichtung ist erfindungsgemäß als Baukastensystem ausgebildet.

Für die Einstellung der Höhenlage und/oder Längsposition der Zugkupplung bestehen jeweils mehrere Stellmöglichkeiten, die alternativ oder kombinativ genutzt werden können. Die Einbauhöhe und die Längsposition können jeweils über die Auswahl und Anordnung der Anbaubeschläge und über die Montageeinheit, insbesondere deren Dreh- und Montagelage am Querträger sowie deren Montagekopf, und über die Auswahl der Zugkupplung, insbesondere deren Stangenlänge und Stangenkopf, beeinflusst werden.

Die Komponenten der Zugeinrichtung, Querträger, Anbaubeschläge, Montageeinheit und Zugkupplung, können erfindungsgemäß schweißfrei, vorzugsweise durch Verschraubungen, miteinander verbunden werden. Dies mindert und verbilligt den Herstell- und Montageaufwand.

Der Querträger, die Anbaubeschläge und die Montageeinheit bestehen aus konstruktiv einfachen und kostengünstigen Bauteilen, die in einfacher Weise und in einer Vielzahl unterschiedlicher Konfigurationen miteinander kombiniert und verbunden werden können. Bei dem Baukastensystem können mit einer relativ kleinen Zahl dieser Komponenten eine Vielzahl geometrisch unterschiedlicher Zugeinrichtungen hergestellt werden. Für die Zugkupplungen können kostengünstige handelsübliche Konstruktionen benutzt werden.

Die Herstellung kann bedarfsweise erfolgen, wodurch nur die Einzelkomponenten mit wenig Aufwand bevorratet werden. Die Herstelltechnik ist flexibel und benötigt wenig Zeit. Insgesamt sind durch die hohe Flexibilität die Zugeinrichtung und das Baukastensystem besonders wirtschaftlich.

Die Anbauschnittstellen zwischen Querträger und Anbaubeschlägen haben verschiedene Vorteile. Einerseits kann der Querträger um seine Längsachse in unterschiedliche axiale Drehstellungen und Anbaustellungen gegenüber den Anbaubeschlägen gebracht werden. Dies ermöglicht entsprechend unterschiedliche Dreh- und Einbaulagen der mit dem Querträger verbundenen Zugkupplung. Ferner ist es möglich, den Querträger mit unterschiedlichen Anbaubeschlägen zu kombinieren. Außerdem ist eine in Fahrzeuglängsrichtung variable Anbindung des Querträgers an den Anbaubeschlägen möglich.

Ein vorteilhafter Anbaubeschlag kann eine bevorzugt plattenartige, abgewinkelte Form aufweisen, deren Arme Montagestellen zur Verbindung mit dem Querträger und dem Fahrzeug, insbesondere dem Fahrzeugchassis, aufweisen. Der variable Anbau des Querträgers an den Anbaubeschlägen kann auch eine axiale Verlagerung der Verbindungsstelle entlang des Querträgers beinhalten, wodurch eine Breitenanpassung der Zugeinrichtung an unterschiedliche Fahrzeug- oder Chassisbreiten ermöglicht wird.

Die Zugeinrichtung weist erfindungsgemäß eine Montageschnittstelle für eine variable Montage der Zugkupplung in unterschiedlichen Drehstellungen am Querträger auf. Die Montageposition der Zugkupplung am Querträger kann dadurch bedarfsweise variiert werden. Dies kann mit oder ohne Kombination einer Drehung des Querträgers um seine Längsachse geschehen. In der erfindungsgemäßen Ausführungsform weist die Zugeinrichtung beide Schnittstellen auf.

Der Querträger kann als einfaches und kostengünstiges Bauteil ausgebildet sein, welches für eine Vielzahl unterschiedlicher Zugeinrichtungsvarianten mit gleicher Formgebung eingesetzt werden kann. Hierbei kann ggf. die Länge des Querträgers in wenig aufwändiger Weise angepasst werden. Der Querträger kann als gerades und einfaches Konstruktionselement bzw. Profil, insbesondere als Rohr ausgebildet sein. Eine nicht rotationssymmetrische, insbesondere prismatische oder ovale, Außenkontur ist für eine drehvariable Anbauschnittstelle von Vorteil.

Die erfindungsgemäße Montageeinheit hat den besonderen Vorteile einer wahlweisen Montage der Zugkupplung mit unterschiedlichen Ausrichtungen am Querträger, nämlich für eine Montage auf Höhe oder unter dem Querträger. Dies ermöglicht verschiedene Varianten der Zugeinrichtung ohne Änderung des Querträgers.

Die Montageeinheit weist eine am Querträger befestigbare Stützeinheit und einen hieran bedarfsweise verstellbar angeordneten Montagekopf für die Zugkupplung auf. Diese Ausbildung sorgt für eine hohe mechanische Stabilität in Verbindung mit einer großen Variationsbreite. Außerdem ergeben sich signifikante Vorteile für eine Minderung des Bau-, Montage- und Herstellaufwands. Die Stützeinheit stabilisiert den Montagekopf in den unterschiedlichen Montagelagen am Querträger. Für die Befestigung der Stützeinheit und des Montagekopfs aneinander und am Querträger können gemeinsame Befestigungsmittel eingesetzt werden, was weitere Aufwands- und Kostenvorteile mit sich bringt.

Für den Montagekopf sind unterschiedliche Ausbildungsformen, insbesondere als verstellbarerer Klemmkäfig oder als Flanschkopf, möglich. Dies wiederum erlaubt mit geringem Aufwand den Anbau einer Vielzahl unterschiedlicher Arten von Zugkupplungen. Diese können außerdem in unterschiedlichen Montagelagen am Querträger befestigt werden. Die Klemmbacken der Klemmkäfige können variieren und können auch zur Lageeinstellung, insbesondere der Höhenlage, der Zugkupplung eingesetzt werden.

In einer Ausgestaltung wird die Montageschnittstelle von einer Montagestelle, insbesondere einer Schraubstelle, am Querträger und von einer schalenförmig den Querträger umgreifenden Montageeinheit gebildet. Eine Montagestelle am Querträger kann eine oder mehrere parallele Durchgangsöffnungen im Querträger für Befestigungsmittel, z.B. Schrauben, aufweisen.

Eine Stützeinheit und ein Montagekopf einer Montageeinheit können mit gemeinsamen Befestigungsmitteln, insbesondere Verschraubungen, am Querträger befestigbar sein. Die Stützeinheit und der Montagekopf können gemeinsam an parallelen Durchgangsöffnungen des Querträgers befestigbar sein.

Die Stützeinheit der Montageeinheit kann unterschiedlich ausgebildet sein. Sie kann z.B. ein schalenförmiges bzw. im Querschnitt U-förmiges Stützelement aufweisen, das mit Formschluss am Querträger angreift und mit einer Befestigung, insbesondere einer Verschraubung, am Querträger fixierbar ist. Die Stützeinheit kann zwei gegenüberliegend am Querträger angreifende Stützelemente aufweisen.

Ein Montagekopf der Montageeinheit kann unterschiedlich ausgebildet sein. Er kann z.B. als verstellbarer Klemmkäfig oder als Flanschkopf ausgestaltet sein.

Ein Klemmkäfig kann mehrere, insbesondere zwei, längs des Querträgers an die Zugkupplung anstellbare und dort fixierbare Klemmbacken aufweisen. Die Klemmbacken des Klemmkäfigs können zur Lageeinstellung, insbesondere der Höhenlage, der Zugkupplung einsetzbar sein. Ein verstellbarer Klemmkäfig ist für den wahlweisen Anbau von Zugkupplungen mit einer festen Kupplungsstange oder mit einer beweglichen, insbesondere abnehmbaren, Kupplungsstange günstig. Ein verstellbarer Klemmkäfig eignet sich auch besonders für eine wahlweise Montage der Zugkupplung auf Höhe und in Zugrichtung hinter dem Querträger oder unter dem Querträger.

In einer Ausführungsform weisen die Klemmbacken eines Klemmkäfigs eine bevorzugt schalenförmige Stützplatte zur Befestigung an einem Stützelement der Montageeinheit und eine Montageplatte zur Befestigung der Zugkupplung auf.

Eine Stützplatte einer Klemmbacke kann eine verstellfähige Befestigungsöffnung, insbesondere ein Langloch, aufweisen. Dies ist für eine Weitenverstellung des Klemmkäfigs und für eine Anpassung an unterschiedliche Zugkupplungen, insbesondere unterschiedliche Stangenenden einer Kupplungsstange, vorteilhaft. Eine Montageplatte einer Klemmbacke kann ein Register von mehreren Montageöffnungen, insbesondere Schrauböffnungen, für Befestigungsmittel, insbesondere Schrauben, aufweisen. Dies ist für eine Lageeinstellung der Zugkupplung, z.B. ihrer Höhenlage und/oder ihrer axialen Lage in Fahrzeuglängsrichtung, von Vorteil.

Ein als Flanschkopf ausgebildeter Montagekopf kann von mehreren abgewinkelten Flanschplatten gebildet werden. Sie ermöglichen z.B. den Anbau einer Zugkupplung mit einem quer ausgerichteten, plattenartigen Montageflansch am Ende der Kupplungsstange. Mit einem Flanschadapter kann die Anbauhöhe der Zugkupplung am Flanschkopf variiert werden. Ein Flanschadapter kann auch die Festigkeit des Flanschkopfs steigern. Ein als Flanschkopf ausgebildeter Montagekopf ist besonders für Schwerlast-Zugeinrichtungen günstig.

Gemäß der Erfindung ist eine Zugeinrichtung für ein Fahrzeug, insbesondere Straßenfahrzeug, vorgesehen, wobei die Zugeinrichtung eine Zugkupplung, einen Querträger, Anbaubeschläge zum Anbau des Querträgers am Fahrzeug und eine Montageeinheit zur Montage der Zugkupplung am Querträger aufweist und wobei die Zugeinrichtung als variables Baukastensystem mit unterschiedlichen Zugkupplungen, Querträgern, Anbaubeschlägen und Montageeinheiten ausgebildet ist.

Ferner ist in einer Ausgestaltung eine Zugeinrichtung für ein Fahrzeug, insbesondere Straßenfahrzeug, vorgesehen, die eine Zugkupplung, einen Querträger, Anbaubeschläge zum Anbau des Querträgers am Fahrzeug und eine Montageeinheit zur Montage der Zugkupplung am Querträger aufweist, wobei die Montageeinheit eine am Querträger befestigbare Stützeinheit und einen hieran verstellbar angeordneten Montagekopf für die Zugkupplung aufweist.

Das mit einer Zugeinrichtung ausgerüstete Fahrzeug kann unterschiedlich ausgestaltet sein. Es kann sich um ein Straßenfahrzeug handeln. Bevorzugt ist das Fahrzeug als Kraftfahrzeug, insbesondere als Nutzfahrzeug oder Wohnmobil, ausgebildet. In einer Ausgestaltung weist das Fahrzeug einen motorisierten Zugkopf mit Frontantrieb und ein Anbauchassis auf. Das Fahrzeug kann einen kastenförmigen Aufbau, insbesondere für ein Wohnmobil, ein Verkaufsfahrzeug oder dgl., aufweisen.

Die Erfindung ist in den Zeichnungen beispielhaft und schematisch dargestellt. Im Einzelnen zeigen:
- Figur 1:: eine erste Variante einer Zugeinrichtung mit Querträger, Anbaubeschlägen, Montageeinheit und Zugkupplung sowie Anbau- und Montageschnittstelle,
- Figur 2:: die Zugeinrichtung von Figur 1 mit anderer Zuordnung der Komponenten und anderer Drehanordnung an der Anbau- und Montageschnittstelle,
- Figur 3:: eine Zugeinrichtung in Form eines Baukastensystems mit Darstellung der verschiedenen Komponenten,
- Figur 4 und 5:: eine Klemmbacke und eine Stützschiene für eine Montageeinheit,
- Figur 6 und 7:: eine Montageinheit mit verschiedenen gedrehten Montagelagen und Einbaulagen der Zugkupplung am Querträger,
- Figur 8 bis 12:: verschiedene Varianten einer Zugeinrichtung und deren Komponenten in Explosionsdarstellungen,
- Figur 13 und 14:: Varianten einer Klemmbacke,
- Figur 15:: eine Variante der Zugeinrichtung von Figur 6 mit einer anderen Zugkupplung,
- Figur 16:: eine Flanschplatte für eine abgewandelte Montageeinheit und
- Figur 17 bis 20:: weitere Varianten der Zugeinrichtung.

Die Erfindung betrifft eine Zugeinrichtung (1) für ein Fahrzeug (10) und ein mit einer solchen Zugeinrichtung (1) ausgerüstetes Fahrzeug (10). Das Fahrzeug (10) ist z.B. als Kraftfahrzeug mit einem Fahrantrieb ausgebildet.

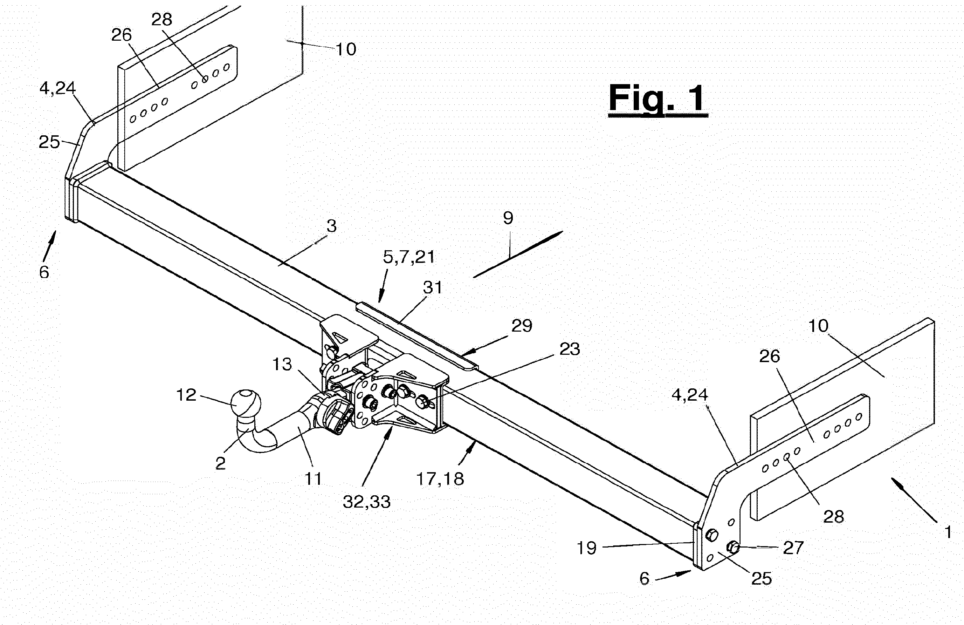

Das Fahrzeug (10) bzw. Zugfahrzeug ist bevorzugt als Straßenkraftfahrzeug ausgebildet. Die Zugeinrichtung (1) wird in dessen Heckbereich am Fahrzeugchassis angebaut und vorzugsweise an dessen in Figur 1 angedeuteten Längsträgern befestigt. Die Befestigung ist vorzugsweise schweißfrei und kann durch Schrauben, Niete oder andere Befestigungsmittel erfolgen.

Das Fahrzeug (10), insbesondere Kraftfahrzeug, kann als Pkw oder Lkw ausgebildet sein. Vorzugsweise ist es als Nutzfahrzeug oder als Wohnmobil ausgestaltet. Das Fahrzeugchassis kann das Originalchassis eines Kraftfahrzeugs (10) oder ein Anbauchassis sein, welches an einem mit einem Frontantrieb motorisierten Zugkopf nachträglich angebaut wird. Ein solches Anbauchassis weist Längsträger und ggf. Querträger sowie eine oder mehrere nicht angetriebene Hinterachsen auf. Das Anbauchassis kann durch einen Adapter mit den Längsträgern des Zugkopfes verbunden sein. Es kann einen bevorzugt kastenförmigen Aufbau, z.B. für ein Wohnmobil, ein Verkaufsfahrzeug oder dgl., aufweisen. Die Zugeinrichtung (1) kann bei der Herstellung oder Erstausrüstung eines Kraftfahrzeugs (10) eingebaut oder später an einem Kraftfahrzeug (10) nachgerüstet werden.

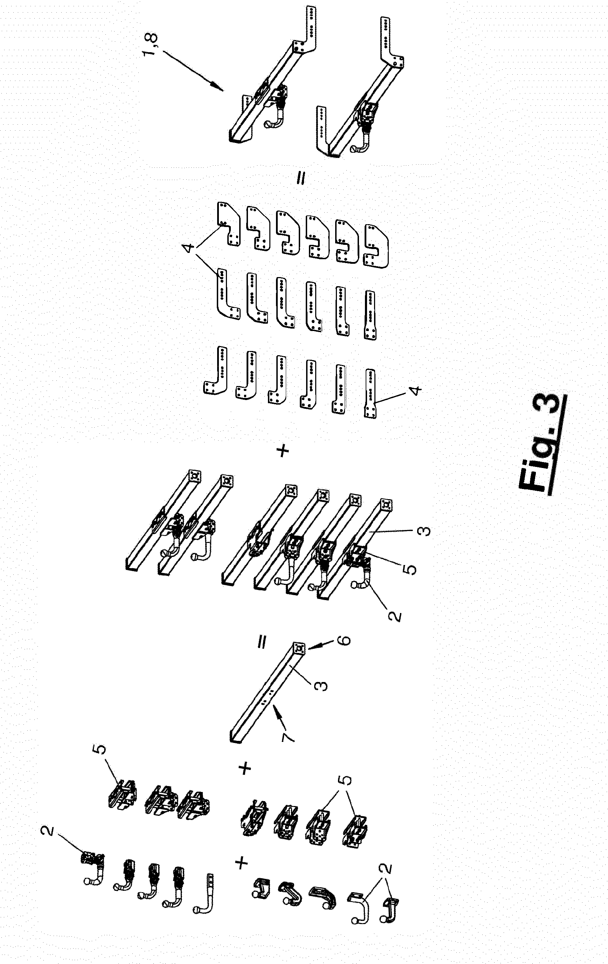

Die Zugeinrichtung (1) ist in den Zeichnungen in verschiedenen Varianten dargestellt. Sie ist als ein in Figur 3 dargestelltes Baukastensystem (8) ausgebildet und kann aus verschiedenen Komponenten in unterschiedlicher Weise konfiguriert werden. Die Zugeinrichtung (1) wird im Wesentlichen von einem Querträger (3), einer Zugkupplung (2), Anbaubeschlägen (4) und einer Montageeinheit (5) gebildet.

Hierdurch lassen sich eine Vielzahl unterschiedlicher Typen und Formen von Zugeinrichtungen (1) aus wenigen Teilen bedarfsgerecht herstellen und an die gegebene Einbausituation am Fahrzeug (10) anpassen. Die Einbausituation für die Zugkupplung (2) wird insbesondere durch die Lage und Ausbildung des Fahrzeugchassis, den Fahrzeugaufbau und dessen heckseitige Auskraglänge über das Fahrzeugchassis sowie den im Heckbereich bestehenden Freiraum bestimmt.

Die bevorzugt paarweise vorhandenen Anbaubeschläge (4) dienen zum Anbau des Querträgers (3) am Kraftfahrzeug (10) bzw. dessen Fahrzeugchassis. Die Montageeinheit (5) ist zur Montage der Zugkupplung (2) am Querträger (3) vorgesehen und ausgebildet. Sie kann ferner eine Steckdosenhalter (43) aufnehmen.

Diese Komponenten (2,3,4,5) der Zugeinrichtung (1) werden schweißfrei mit geeigneten Befestigungsmitteln, insbesondere Verschraubungen, miteinander verbunden bzw. aneinander befestigt. Das Baukastensystem (8) beinhaltet eine relativ kleine Zahl an Varianten von Zugkupplungen (2), Anbaubeschlägen (4) und Montageeinheiten (5). Der Querträger (3) kann im Wesentlichen gleich ausgebildet sein, wobei vorzugsweise nur seine Länge an die besagte Einbausituation angepasst wird.

Der Querträger (3) erstreckt sich in Montagestellung quer zur Längsachse bzw. zur Zugrichtung (9) des Fahrzeugs (10) in Vorwärtsfahrt. Er ist dabei liegend bzw. horizontal am Fahrzeugheck angeordnet. Die Zugkupplung (2) ist bevorzugt zentral am Querträger (3) angeordnet.

Durch geeignete Auswahl und Kombination der Komponenten, insbesondere der Anbaubeschläge (4) und Montageeinheiten (5) sowie ggf. Auswahl einer geeigneten Zugkupplung (2) kann die Zugkupplung (2) mit ihrem Kupplungskopf (12) in der erforderlichen Einbauposition, d.h. vertikale Einbauhöhe und horizontale Einbaulage, am Kraftfahrzeug (10) angeordnet und befestigt werden.

Die Zugeinrichtung (1) weist in den gezeigten Ausführungsbeispielen eine Anbauschnittstelle (6) auf, die für einen variablen Anbau des Querträgers (3) in unterschiedlichen axialen Drehstellungen an den Anbaubeschlägen (4) vorgesehen und ausgebildet ist. Der Querträger (3) kann dabei um seine Längsachse gedreht und in verschiedenen Drehstellungen mit dem Anbaubeschlägen (4) verbunden werden. Über die verschiedenen vorgegebenen Drehstellungen kann auch die Einbaulage der Zugkupplung (2) verändert werden. Die Verbindung zwischen dem Querträger (3) und dem jeweiligen Anbaubeschlag an der Anbauschnittstelle (6) kann über eine schweißfreie Befestigung (20), z.B. eine Verschraubung, erfolgen. In den gezeigten Ausführungsbeispielen kann der Querträger (3) um 90° gedreht werden.

Die Anbauschnittstelle (6) kann in unterschiedlicher Weise ausgebildet sein. In den gezeigten Ausführungsbeispielen wird sie jeweils von einer Stirnplatte (19) am Querträger und rotationssymmetrisch verteilten Befestigungen (20), insbesondere Verschraubungen, an der Stirnplatte (19) und Montagestellen (27) am Anbaubeschlag (4) gebildet. Die rotationssymmetrische Verteilung erlaubt einen Querträgeranbau in den verschiedenen Drehstellungen. Außerdem können die Anbaubeschläge gewendet und gewechselt werden. Für eine 90°-Drehung sind z.B. vier Befestigungsstellen bzw. Schraubstellen vorhanden, die in einer quadratischen und mittensymmetrisch zur Trägerlängsachse angeordneten Verteilung vorgesehen sind.

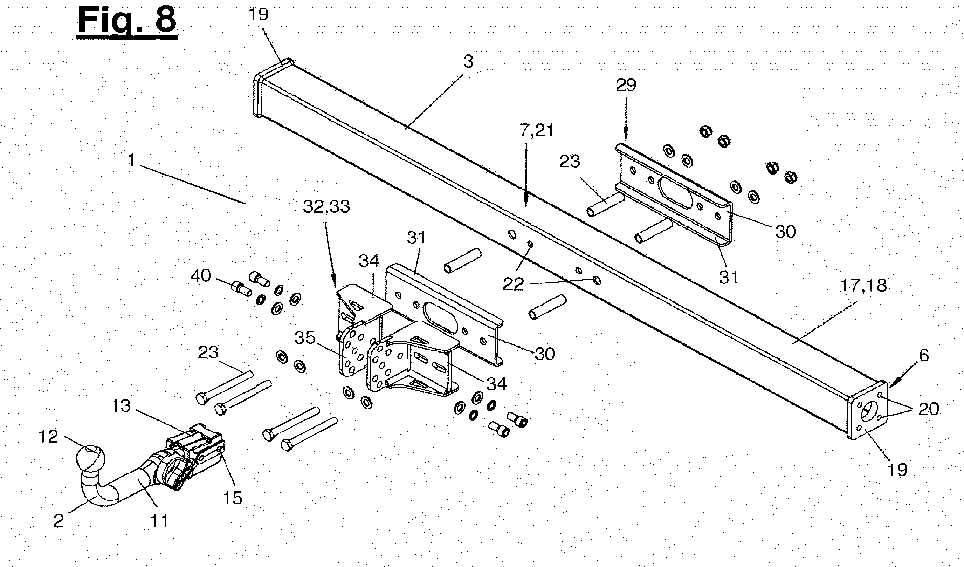

Die Stirnplatte (19) ist z.B. in der Explosionsdarstellung von Figur 8 dargestellt. Sie ist mit dem Stirnende des Querträgers (3) in geeigneter Weise verbunden z.B. durch Schweißen. Sie kann eine zentrale Durchgangsöffnung aufweisen. Die Befestigungsstellen (20) werden z.B. durch Gewindebuchsen oder Schrauböffnungen in der Stirnplatte (19) gebildet.

Der Querträger (3) weist vorzugsweise ein gerades Tragelement (17) auf, an dessen Enden die Stirnplatten (19) befestigt sind. Das Tragelement (17) ist als Rohr ausgebildet. Es kann alternativ aus einem Vollmaterial bestehen oder eine andere Art von Profil aufweisen.

Der Querträger (3) bzw. sein Tragelement (17) hat vorzugsweise eine nicht-rotationssymmetrische Außenkontur (18). In den gezeigten Ausführungsbeispielen hat der Rohrmantel (18) eine prismatische Außenkontur. Die Querschnitts-Außenkontur ist vorzugsweise quadratisch. Sie kann alternativ eine andere Rechteckform oder eine Mehreckform aufweisen. Der Querträger (3) kann eine vorgegebene Länge haben. Er kann auch längenveränderlich ausgebildet sein.

Die Zugeinrichtung (1) weist in den gezeigten Ausführungsbeispielen eine Montageschnittstelle (7) auf, die für eine variable Montage der Zugkupplung (2) in unterschiedlichen Drehstellungen am Querträger (3) vorgesehen und ausgebildet ist. Die Montageschnittstelle (7) kann ebenfalls in unterschiedlicher Weise ausgebildet sein.

Sie wird in den gezeigten Ausführungsbeispielen von einer bevorzugt zentralen Montagestelle (21) am Querträger (3) und von einer schalenförmig dem Querträger (3) umgreifenden Montageeinheit (5) gebildet. Die Montagestelle (21) ist vorzugsweise als Schraubstelle am Querträger (3) ausgebildet. Sie weist z.B. mehrere, z.B. vier parallele Durchgangsöffnungen (22) am Querträger (3) auf, die für bevorzugt schweißfreie Befestigungsmittel (23) vorgesehen sind. Die Befestigungsmittel (23) bestehen z.B. aus Verschraubungen, die von Schrauben, Stützhülsen und Muttern gebildet werden und in den Explosionsdarstellungen gezeigt sind. Die Durchgangsöffnungen (22) sind z.B. in einer Reihe längs der Trägerachse am Querträger (3) angeordnet. Sie sind vorzugsweise nur an zwei gegenüberliegenden Seiten des Querträgers (3) bzw. Mantels (18) angeordnet. Bei der vorerwähnten Drehung des Querträgers (3) wird die Montagestelle (21) mitgedreht.

Die Zugeinrichtung (1) weist beide Schnittstellen (6,7) auf.

Die Montageeinheit (5) ist derart ausgebildet, dass sie eine wahlweise Montage der Zugkupplung (2) in verschiedenen Ausrichtungen und Einbaulagen am Querträger (3) ermöglicht. Sie erlaubt insbesondere eine wahlweise Montage der Zugkupplung (2) auf Höhe und in Zugrichtung (9) hinter dem Querträger (3) oder unter dem Querträger (2). Durch diese variablen Montagemöglichkeiten kann die Höhenlage der Zugkupplung (2) am Fahrzeug bzw. die Auskraglänge der Zugkupplung (2) nach hinten am Fahrzeugheck bzw. entgegen der Fahrtrichtung bzw. Zugrichtung (9) verändert werden.

Diese Ausbildung der Montageinheit (5) wird mit beiden Anbauschnittstellen (6,7), insbesondere mit der vorbeschriebenen Montagestelle (21), kombiniert.

Die Montageeinheit (5) hat in den gezeigten Ausführungsformen eine am Querträger (3) befestigbare Stützeinheit (29) und einen hieran ggf. verstellbar angeordneten Montagekopf (32) für die Zugkupplung (2).

Die Stützeinheit (29) und der Montagekopf (32) werden vorzugsweise mit gemeinsamen Befestigungsmitteln (23) aneinander und am Querträger (3) befestigt. Die Befestigung ist vorzugsweise schweißfrei, wobei die Befestigungsmittel (23) z.B. als Verschraubungen in der vorerwähnten Weise ausgebildet sind. Die Stützeinheit (29) und der Montagekopf (32) werden dabei gemeinsam an parallelen Durchgangsöffnungen (22) des Querträgers (3) befestigt.

Die Stützeinheit (29) weist ein schalenförmiges Stützelement (30) auf, dass mit Formschluss am Querträger (3) angreift und mit einer Befestigung am Querträger (3) fixierbar ist bzw. in Montagestellung fixiert ist. Die Befestigung wird vorzugsweise von den erwähnten gemeinsamen Befestigungsmitteln (23) gebildet. Alternativ ist eine anderweitige und eigenständige Befestigung möglich.

Das schalenförmige Stützelement (30) hat im Querschnitt z.B. eine U- oder L-Form mit einem zentralen Steg und ein oder zwei abgewinkelten Seitenflanschen (31), die den Querträger (3) seitlich mit engem Abstand umgreifen und eine formschlüssige Führung bilden.

Die Stützeinheit (29) weist vorzugsweise mehrere, z.B. zwei gegenüberliegend am Querträger (3) angreifende Stützelemente (30) auf. Diese bilden eine Stützmanschette. Alternativ kann nur ein einzelnes schalenförmiges Stützelement (30) vorhanden sein, welches vorzugsweise an der dem Montagekopf (32) gegenüberliegenden Querträgerseite angeordnet wird.

Der Montagekopf (32) kann in unterschiedlicher Weise z.B. als Klemmkäfig (33) oder als Flanschkopf (41) ausgebildet sein. Er kann hierdurch an unterschiedliche Arten von Zugkupplungen (2) angepasst werden. Die weitere Ausbildung der Montageeinheit (5) wird nachstehend näher erläutert.

Figur 3 zeigt den Baukasten der verschiedenen Zugkupplungen (2), Montageeinheiten (5) und Anbaubeschläge (4) mit einem vorzugsweise im Wesentlichen einheitlichen Querträger (3), der ggf. in der Länge an unterschiedliche Fahrzeugbreiten angepasst wird. Die Zugeinrichtung (1) und ihre Komponenten bestehen aus geeigneten Werkstoffen, vorzugsweise Metall, insbesondere Stahl.

Die vorzugsweise paarweise vorhandenen Anbaubeschläge (4) sind vorzugsweise als Platten (24) ausgebildet. Sie können alternativ eine andere Ausbildung, insbesondere Profilform, haben. Sie haben bevorzugt eine L- oder C-förmig abgewinkelte Form mit Armen (25,26). In einer Variante sind auch gerade Anbaubeschläge (4) bzw. Platten (24) ohne Abwinklung oder eine andere Winkelgeometrie möglich.

Die abgewinkelten Arme (25,26) weisen an ihren Endbereichen Montagestellen (27,28) zur Verbindung mit dem Querträger (3) einerseits und dem Kraftfahrzeug (10) andererseits auf. Die Montagestellen (27,28) sind z.B. als Schrauböffnungen ausgebildet. Die Montagestelle (27) für die Verbindung mit dem Querträger (3) kann für die Schaffung einer Anbauschnittstelle (6) ausgebildet sein und kann z.B. die erwähnte quadratische Bohrungsanordnung haben. Bei der geraden Beschlagvariante kann der Einzelarm an beiden Enden die besagten Montagestellen (27,28) aufweisen.

Die Montagestelle (28) für die Fahrzeugbefestigung kann von mehreren Reihen von Schraublöchern oder anderen Befestigungsmöglichkeiten gebildet werden, um eine in Fahrzeuglängsrichtung (9) variable Anbindung zu ermöglichen, wobei der Arm (26) hierfür eine entsprechend große Länge aufweist. Er kann insbesondere länger als der andere Arm (25) sein.

Die Zugkupplungen (2) können ebenfalls unterschiedlich ausgebildet sein. Sie weisen jeweils eine Kupplungsstange (11), vorzugsweise eine Kugelstange, mit einem Kupplungskopf (12), vorzugsweise einem Kugelkopf, am einen Ende und einem Stangenkopf (13,14) am anderen Ende auf. Die Kupplungsstange (11) kann eine einfach oder mehrfach abgewinkelte Form, z.B. L- oder U-Form, haben. Ferner kann gemäß Figur 3 die Stangenlänge variieren. Die Zugkupplungen (2) können starr oder beweglich, insbesondere steckbar, ausgebildet sein.

Der Stangenkopf kann in unterschiedlicher Weise ausgebildet sein. Der eine Stangenkopf (14) ist für eine feste Verbindung der Kupplungsstange (11) vorgesehen und kann an das Stangenende angeformt sein. Er weist zu Befestigungszwecken seitliche Montageflächen (15) oder einen stirnseitigen Montageflansch (16) auf.

Der andere Stangenkopf (13) kann steckbar ausgeführt sein und besteht aus einem hülsenartigen Aufnahmeteil nebst mechanischer Verriegelung und einem hier einsteckbaren und verriegelbaren profilierten Stangenende. Das Aufnahmeteil wird an der Montageeinheit (5) befestigt und hat hierfür z.B. seitliche Montageflächen (15). Der steckbare Stangenkopf (13) ist breiter als der feste Stangenkopf (14) mit den seitlichen Montageflächen (15). Die Steckrichtung kann horizontal oder vertikal sein.

Die Montageeinheit (5) ist auf diese unterschiedlichen Kopfbreiten adaptierbar. Durch unterschiedliche Ausbildungen des Montagekopfes (32) kann den unterschiedlichen Montagemöglichkeiten des festen Stangenkopfes (14) mit seitlichen Montageflächen (15) oder stirnseitigen Montageflansch (16) Rechnung getragen werden.

Der Montagekopf (32) ist in der einen Variante als Klemmkäfig (33) ausgebildet und weist mehrere, insbesondere zwei, Klemmbacken (34) auf, die an die Zugkupplung (2), insbesondere die seitlichen Montageflächen (15), in Längsrichtung des Querträgers (3) angestellt und dort mittels geeigneter Befestigungsmittel, insbesondere Verschraubungen (40), fixiert werden können. Figur 1, 2, 6 bis 12 und 15 zeigen eine solche Ausbildung.

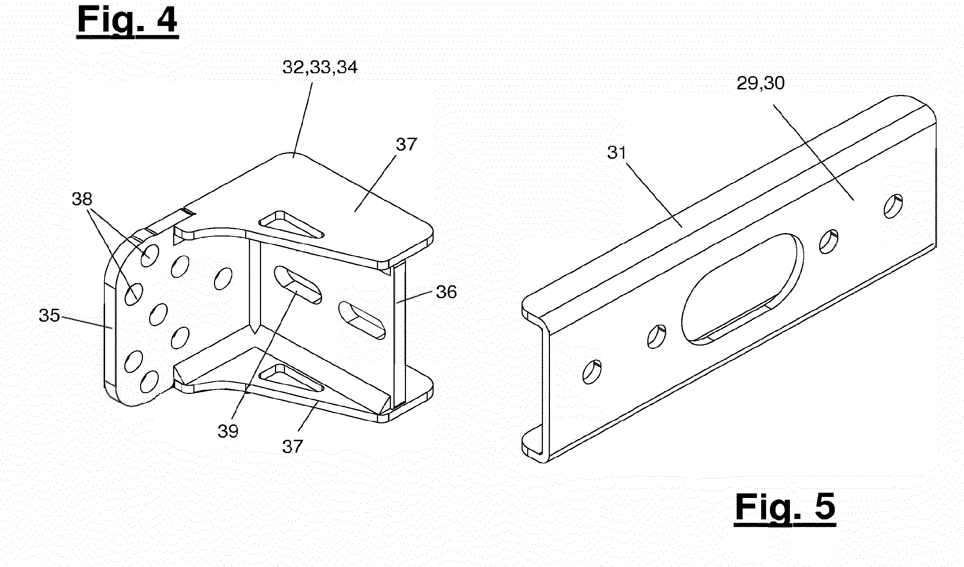

Die Klemmbacken (34) können variieren, wobei in Figur 4, 13 und 14 verschiedene Varianten dargestellt sind. Hierdurch können unterschiedliche Klemmkäfig-Geometrien gebildet werden.

Die Klemmbacken (34) weisen eine bevorzugt schalenförmige Stützplatte (36) zur Befestigung an einem Stützelement (30) und eine Montageplatte (35) zur Befestigung der Zugkupplung (2) auf. Die Platten (35,36) sind winklig, vorzugsweise rechtwinklig, zueinander angeordnet und miteinander verbunden, insbesondere verschweißt. Die Verbindung kann über Seitenteile (37) stabilisiert werden. Diese können an der Unterseite über die Stützplatte (36) hinausstehen und deren Schalenform bilden. Die Stützplatte (36) wird auf einem Stützelement (30) aufgesetzt und umgreift dieses U-förmig unter Bildung einer formschlüssigen Führung. Alternativ kann die Stützplatte (36) direkt auf dem Mantel (18) aufgesetzt und dort geführt werden.

Die Klemmbacke (34) und die Stützplatte (36) können in Längsrichtung des Querträgers (3) auf dem Stützelement (30) oder dem Mantel (18) gleiten. Die Klemmbacken (34) sind paarweise und an der Zugkupplung (2) einander gegenüberliegend angeordnet, wobei durch deren gleitende Verstellbarkeit die Weite des Klemmkäfigs (33) an den Stangenkopf (13, 14) eingestellt werden kann.

Die Stützplatte (36) weist für diese Verstellmöglichkeit eine verstellfähige Befestigungsöffnung (39), z.B. ein achsparalleles Langloch, auf. Hier kann ein gemeinsames Befestigungsmittel (23) durchgreifen. Die Montageplatte (35) weist eine oder mehrere Montageöffnungen (38), insbesondere Schrauböffnungen, für die Befestigungsmittel (40), vorzugsweise Schrauben, auf. Vorzugsweise ist ein zweidimensionales Register von mehreren Montageöffnungen (38) vorgesehen, welches unterschiedliche Anbaulagen und Montagestellungen einer Zugkupplung (2) und/oder den Anbau verschiedener Zugkupplungen (2) mit unterschiedlichen Montageflächen (15) und dortigen Schrauböffnungen ermöglicht.

Die verschiedenen Klemmbacken (34) unterscheiden sich im Wesentlichen in der Größe und Ausbildung der Montageplatte (35) und in der Lage der dortigen Montageöffnungen (38). Sie sind zur Verbindung mit seitlichen Montageflächen (15) an Zugkupplungen (2) mit einem steckbaren oder festen Stangenkopf (13, 14) vorgesehen. Die axiale Verstellmöglichkeit längs des Querträgers (3) ermöglicht eine Adaption an eine Vielzahl von verschiedenen Zugkupplungen (2).

Ferner kann die Länge der Montageplatte (35) und die Distanz der Montageöffnungen (38) von der Stützplatte (36) bzw. vom Querträger (3) variieren. Bei den verschiedenen Varianten des Klemmkäfigs (33) können durch Austausch der Klemmbacken (34) unterschiedliche Anbaulagen und Anbaudistanzen der Zugkupplungen (2) am Querträger (3) realisiert werden. Für die Anpassung an die jeweiligen Fahrzeugerfordernisse genügt ein Austausch der Klemmbacken (34). Die anderen Teile der Montageeinheit (5) können gleich bleiben.

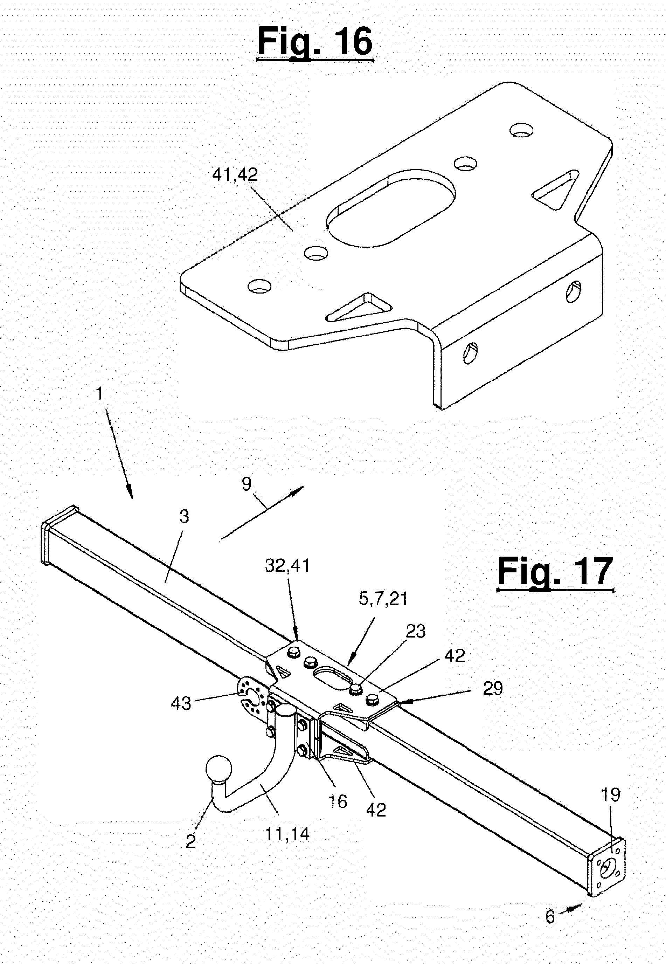

In der anderen Variante von Figur 16 und 17 sowie Figur 19 und 20 ist der Montagekopf (32) als Flanschkopf (41) ausgebildet. Dieser weist mehrere, vorzugsweise zwei abgewinkelte Flanschplatten (42) auf, deren einer, z.B. größerer, Steg jeweils mit einem Stützelement (30) durch die gemeinsamen Befestigungsmittel (23) verbunden ist. Der andere, abgewinkelte Steg ist in Anbaustellung vom Querträger (3) seitlich distanziert. Die Flanschplatten (42) werden an gegenüberliegenden Seiten, insbesondere Ober- und Unterseite, des Querträgers (3) montiert, wobei ihre vorerwähnten abgewinkelten Stege gegeneinander gerichtet sind und miteinander eine Montagefläche für den Montageflansch (16) einer Zugkupplung (2) bilden. Die Montagefläche kann auf Höhe und in Zugrichtung (9) mit Distanz hinter dem Querträger (3) liegen.

Bei der Ausführungsform mit einem Flanschkopf (41) ist die Montagestelle für die Zugkupplung (2) auf gleicher Höhe des Querträgers (3) und in Zugrichtung (9) hinter dem Querträger (3) angeordnet. Der Montageflansch (16) kann quer zu der einfach oder mehrfach abgewinkelten Kupplungsstange (11) ausgerichtet sein. Figur 16, 17 und Figur 19, 20 zeigen hierfür verschiedene Ausgestaltungsmöglichkeiten mit unterschiedlich geformten Kupplungsstangen (11).

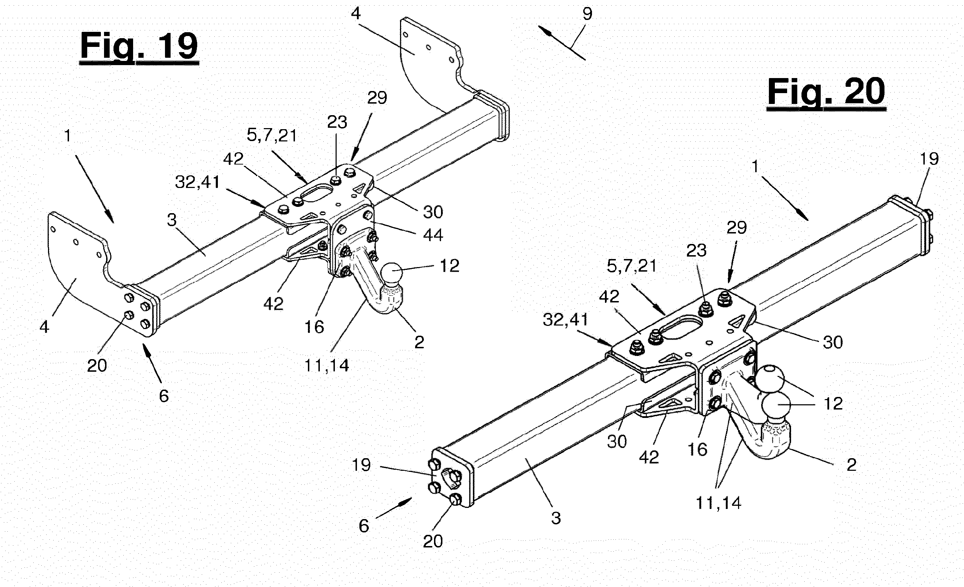

Figur 19 zeigt eine Variante, bei der ein Flanschadapter (44) zwischen der Montageplatte (16) und der Montagefläche des Flanschkopfs (41) angeordnet ist. Der Flanschadapter (44) kann die Montageeinheit (5), insbesondere den Montagekopf (32) verstärken. Er kann andererseits eine Veränderung der Höhenlage der Zugkupplung (2) und ihres Kupplungskopfes (12) ermöglichen. Der Flanschadapter (44) kann einteilig oder mehrteilig sein. Er kann z.B. eine aufrechte Adapterplatte zwischen der Montagefläche an den abgewinkelten Flanschplattenstegen und dem Montageflansch (16) aufweisen. Die Adapterplatte kann z.B. nach unten über den Flanschkopf (41) vorstehen und einen tieferen Anbau der Zugkupplung (2) ermöglichen. Der Flanschadapter (44) kann außerdem einen Stützwinkel aufweisen, der zwischen dem unteren, überstehenden Ende der Adapterplatte und der unteren Flanschplatte (42) angeordnet und befestigt ist. Er kann die Steifigkeit der Montageeinheit (5) erhöhen. Diese Ausbildung der Zugeinrichtung (1) ist besonders für schwere Anhängelasten geeignet.

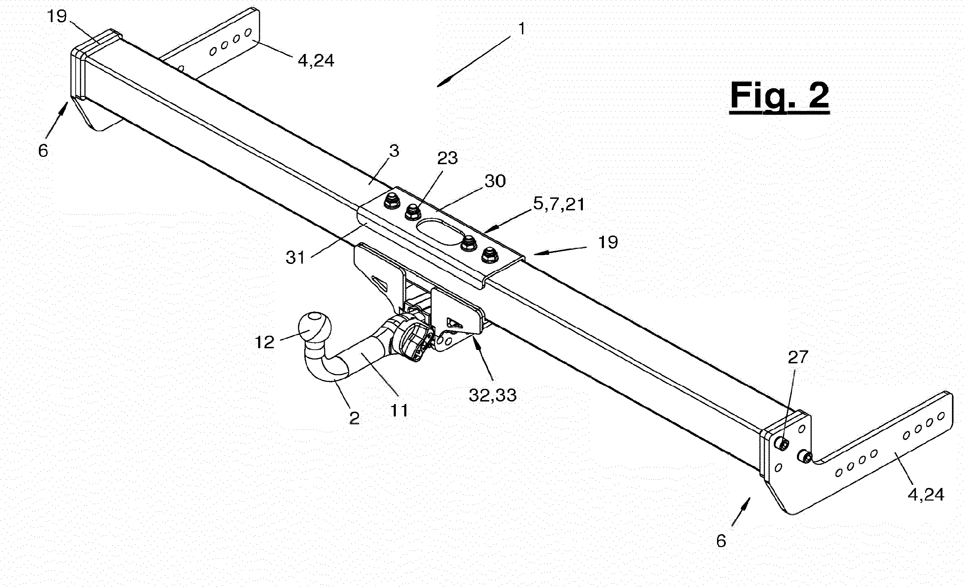

Figur 1 und 2 zeigen eine erste Variante der Zugeinrichtung (1) und deren unterschiedliche Anbaumöglichkeiten. Die Anbauflansche (4) sind dabei gleichartig und werden mit unterschiedlicher Ausrichtung ihrer kürzeren Arme (25) am Querträger (3) mittels der Anbauschnittstellen (6) montiert. In Figur 1 sind die zum Fahrzeugchassis (10) weisenden Arme (26) oberhalb des Querträgers (3) und in Figur 2 unterhalb des Querträgers (3) angeordnet. Hierdurch ergeben sich unterschiedliche Höhenlagen des Querträgers (3) und der Zugkupplung (2) relativ zum Fahrzeugchassis (10).

Figur 1 und 2 verdeutlichen außerdem unterschiedliche Drehstellungen des Querträgers (3) bzw. unterschiedliche Ausrichtungen seiner Durchgangsöffnungen (22) sowie der dortigen Befestigungsmittel (23). In Figur 1 sind die Durchgangsöffnungen (22) und die Montageeinheit (5) liegend bzw. horizontal angeordnet, wobei der Klemmkäfig (33) an der zum Fahrzeugheck weisenden Rückseite des Querträgers (3) angeordnet ist und dort eine in Höhe des Querträgers (3) montierte Zugkupplung (2) aufnimmt.

In Figur 2 ist der Querträger (3) um 90° gedreht, wobei die Durchgangsöffnungen (22) und die Befestigungsmittel (23) mitgedreht und aufrecht bzw. vertikal ausgerichtet sind. Der Klemmkäfig (33) und die Zugkupplung (2) befinden sich an der Unterseite des Querträgers (3). Die Zugkupplung (2) ist in Figur 2 um 90° gedreht am Klemmkäfig (33) montiert.

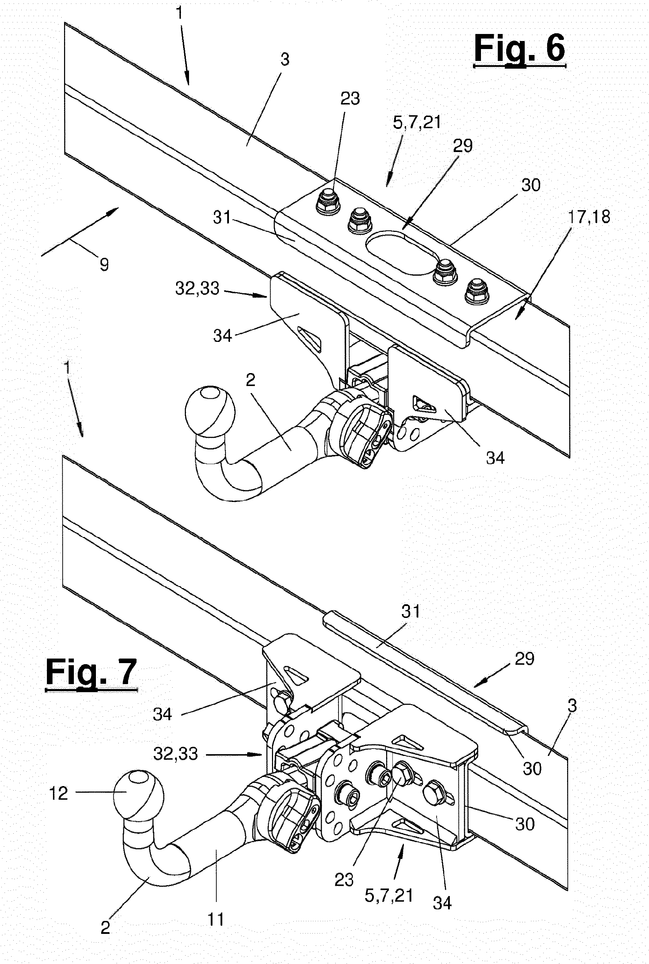

Figur 6 und 7 verdeutlichen die unterschiedlichen Anbaumöglichkeiten der Zugkupplung (2) unter und hinter dem Querträger (3) in einer vergrößerten Darstellung. Hier ist auch die Befestigung des breiteren steckbaren Stangenkopfs (13) an den entsprechend weit auseinander stehenden Klemmbacken (34) dargestellt. Das Register der Montageöffnungen (28) ermöglicht die um 90° gedrehten Montagelagen des Stangenkopfs (13) am Klemmkäfig (33).

Figur 8 zeigt eine Montageeinheit (5) entsprechend Figur 1 und 7 in einer Explosionsdarstellung, wobei auch die Montagestelle (21) und die Durchgangsöffnungen (22) sichtbar sind. Die gezeigten Stützhülsen können in die Durchgangsöffnungen (22) und den hohlen Querträger (3) eingesetzt werden.

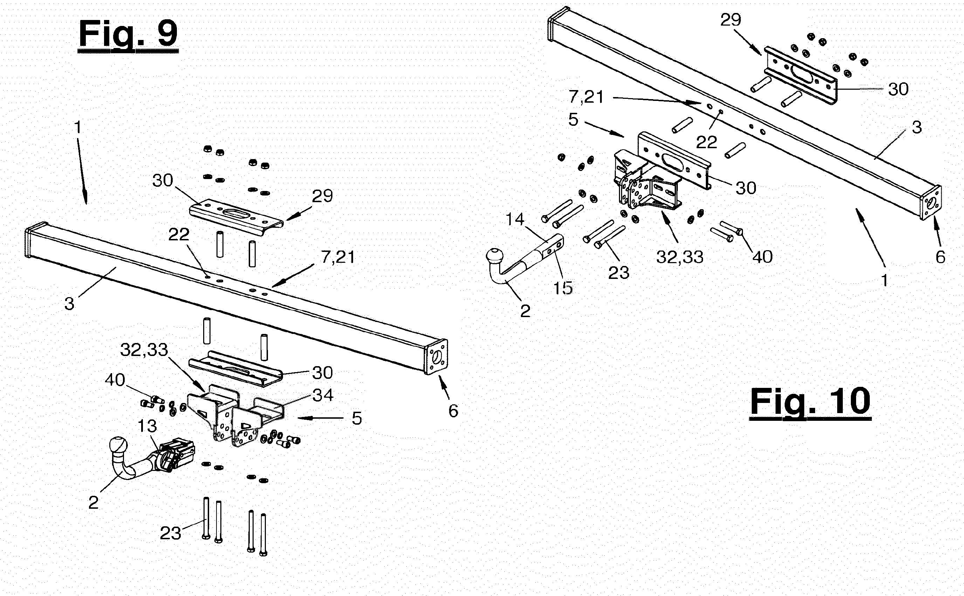

Figur 9 zeigt die gleiche Zugeinrichtung in einer um 90° gedrehten Stellung und in einer Explosionsdarstellung. Die Anordnung von Figur 9 entspricht der in Figur 2 und 6 gezeigten Ausführungsform.

Figur 10 zeigt eine Variante zu Figur 8 mit gleicher Ausbildung der Montageeinheit (5) und gleicher Drehstellung des Querträgers (3), wobei die Zugkupplung (2) einen festen Stangenkopf (14) aufweist. Die Klemmbacken (34) des Klemmkäfig (33) sind entsprechend verstellt und enger benachbart als in Figur 8 angeordnet.

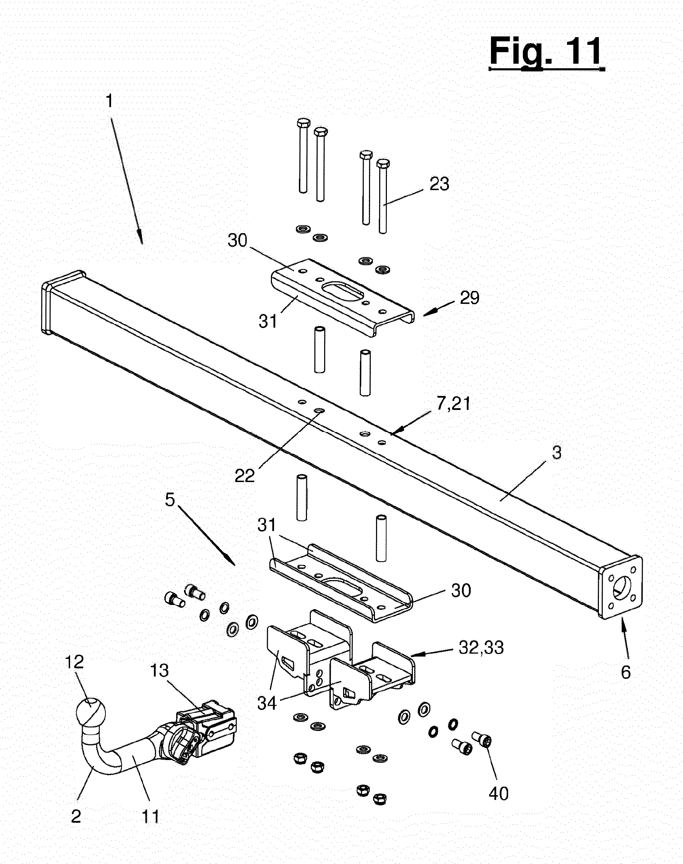

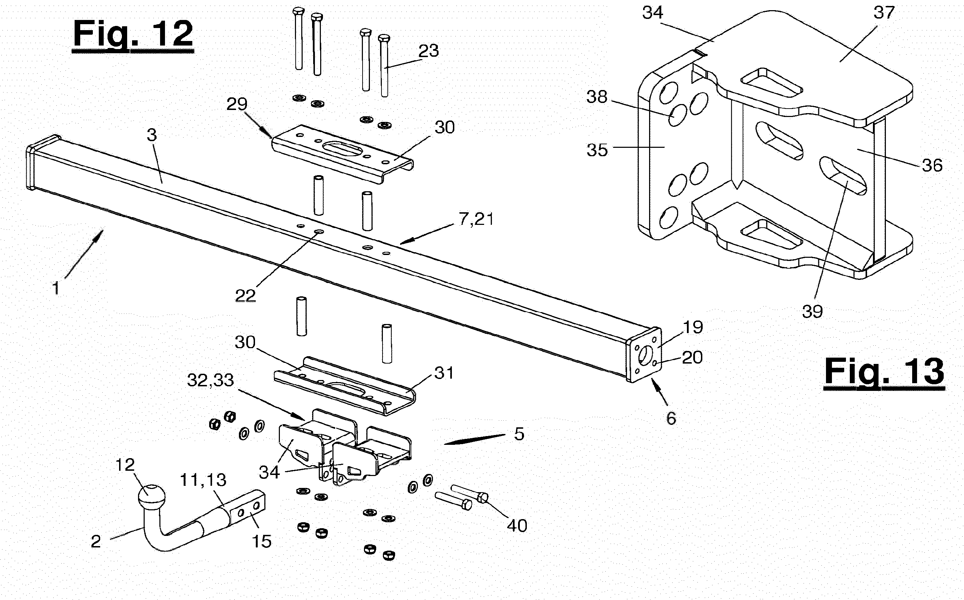

Figur 11 zeigt eine Variante der Zugeinrichtung (1) mit einem Anbau der Zugkupplung (2) an der Unterseite des Querträgers (3). In dieser Ausführungsform kommt ein Klemmkäfig (33) zum Einsatz, dessen Klemmbacken (34) eine kürzere Montageplatte (35) als in Figur 8 bis 10 aufweisen. Die betreffende Klemmbacke (34) ist in Figur 13 dargestellt. Figur 12 zeigt die Zugeinrichtung (1) von Figur 11 mit einer anderen Zugkupplung (2) mit festen Stangenkopf (14) und einem entsprechend in der Weite verkleinerten Klemmkäfig (33).

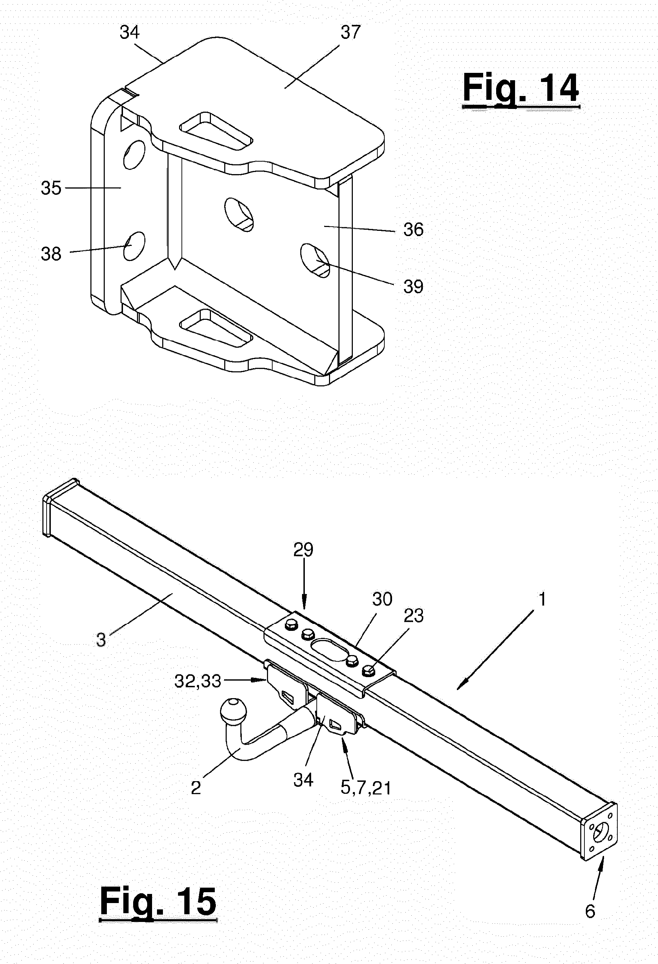

Figur 14 und 15 zeigen eine weitere Variante der Zugeinrichtung (1) mit anderen Klemmbacken (34), die eine weiter verkürzte Montageplatte (35) haben. Die z.B. unter dem Querträger (3) montierte Zugkupplung (2) kann dadurch nach oben an den Querträger (3) angenähert werden.

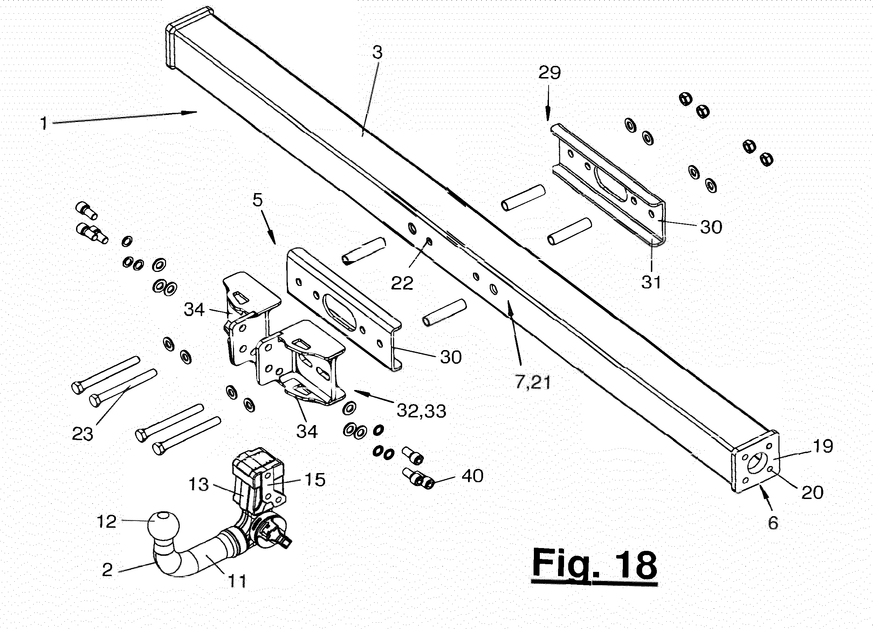

Figur 18 zeigt eine weitere Abwandlung der Zugeinrichtung (1) mit einem Klemmkäfig (33). In dieser Variante kommt eine Zugkupplung (2) mit einer zweifach abgewinkelten Kupplungsstange (11) zum Einsatz, deren steckbarer Stangenkopf (13) nach oben weist. Der Montagekopf (32) bzw. Klemmkäfig (33) ist in dieser Variante an der zum Fahrzeugheck weisenden Rückseite des Querträgers (3) montiert.

Abwandlungen der gezeigten und beschriebenen Ausführungsformen sind in verschiedener Weise möglich. Insbesondere können die Merkmale der verschiedenen Ausführungsbeispiele beliebig miteinander kombiniert und auch ausgetauscht werden.

In einer Abwandlung kann der Querträger (3) zwei oder mehr einander kreuzende Anordnungen von Montagestellen (21) bzw. Durchgangsöffnungen (22) haben. Hierdurch kann die Montageeinheit (5) gegenüber einem Querträger (3) um dessen Längsachse verdreht angeordnet und montiert werden. Die Montagestellen (21) können auch auf andere Weise als durch Durchgangsöffnungen (22) gebildet werden, z.B. durch Vorsprünge oder Vertiefungen am Mantel (18).

Variabel ist auch die Anbauschnittstelle (6). Sie kann entfallen, wobei der Querträger (3) fest mit Anbaubeschlägen (4) verbunden, z.B. verschweißt sein kann. Die Anbauschnittstelle (6) kann anderseits in Lage und/oder Ausbildung variieren. Der Drehwinkel kann von 90° abweichen. Es können auch mehr als zwei Drehstellungen vorhanden sein. Ferner kann bei der Anbauschnittstelle (6) auf eine Drehbarkeit bzw. auf unterschiedliche axiale Drehstellungen des Querträgers (3) relativ zu den Anbaubeschlägen (4) verzichtet werden. Der variable Anbau des Querträgers (3) an den Anbaubeschlägen (4) kann in der Anbaumöglichkeit von unterschiedlichen Anbaubeschlägen (4) am bevorzugt einheitlichen Querträger (3) bestehen. Die vorgenannte kreuzende Anordnung von Montagestellen (21) erlaubt trotzdem unterschiedliche Montagepositionen bzw. Drehlagen der Montageeinheit (5) gegenüber dem Querträger (3) .

Die Stirnplatte (19) kann auf andere Weise ausgebildet bzw. befestigt sein, z.B. als integraler Bestandteil eines Querträgers (3). Die Zahl und Anordnung der Befestigungen (20) kann variieren, wobei z.B. mehr als vier Befestigungen (20) vorhanden und in einem Ring, vorzugsweise konzentrisch zur Querträgerachse, angeordnet sind. Sie kann auch eine drehtolerante Fassung zwischen Querträger (3) und Anbaubeschlägen (4) aufweisen.

Ferner kann die Anbauschnittstelle (6) bzw. die Verbindung des Querträgers (3) mit den Anbaubeschlägen (4) von den Stirnseiten des Querträgers (3) weiter nach innen verlagert werden und am Umfang bzw. Mantel (18) erfolgen. Die Anbaubeschläge (4) können hierfür eine entsprechend geänderte Form mit einer Aufnahmeöffnung und auch mit Befestigungsflanschen oder dergleichen aufweisen.

Die Montageschnittstelle (7) kann ebenfalls entfallen, wobei die Montagelage am Querträger (3) fest vorgegeben ist und ggf. nur der Querträger (3) über die Anbauschnittstelle (6) gedreht wird.

In weiterer Abwandlung können die Zugkupplungen (2) variieren. Eine bewegliche Zugkupplung (2) kann z.B. eine ein- oder mehrachsig schwenkbare Kupplungsstange (11) mit manueller oder motorischer Betätigung und ggf. mit Fernbedienung aufweisen.

Das Fahrzeug (10) kann ohne eigenen Fahrantrieb ausgebildet sein. Es kann z.B. als Anhänger für ein motorisiertes Zugfahrzeug ausgestaltet sein.

### BEZUGSZEICHENLISTE

- 1: Zugeinrichtung
- 2: Zugkupplung
- 3: Querträger
- 4: Anbaubeschlag
- 5: Montageeinheit
- 6: Anbauschnittstelle
- 7: Montageschnittstelle
- 8: Baukastensystem
- 9: Zugrichtung, Fahrtrichtung
- 10: Fahrzeug, Fahrgestell
- 11: Kupplungsstange, Kugelstange
- 12: Kupplungskopf, Kugelkopf
- 13: Stangenkopf, steckbar
- 14: Stangenkopf, fest
- 15: Montagefläche seitlich
- 16: Montageflansch
- 17: Tragelement, Rohr
- 18: Mantel, Außenkontur
- 19: Stirnplatte
- 20: Befestigung, Verschraubung
- 21: Montagestelle, Schraubstelle
- 22: Durchgangsöffnung
- 23: Befestigungsmittel, Verschraubung
- 24: Platte
- 25: Arm
- 26: Arm
- 27: Montagestelle, Schraubstelle zu Querträger
- 28: Montagestelle, Schraubstelle zu Fahrzeug
- 29: Stützeinheit
- 30: Stützelement, Stützschiene
- 31: Seitenflansch, Führung
- 32: Montagekopf
- 33: Klemmkäfig
- 34: Klemmbacke
- 35: Montageplatte
- 36: Stützplatte
- 37: Seitenteil
- 38: Montageöffnung
- 39: Befestigungsöffnung, Langloch
- 40: Befestigungsmittel, Verschraubung
- 41: Flanschkopf
- 42: Flanschplatte
- 43: Steckdosenhalter
- 44: Flanschadapter

## Patentansprüche

1. Zugeinrichtung für ein Fahrzeug (10), insbesondere Straßenfahrzeug, wobei die Zugeinrichtung (1) eine Zugkupplung (2), einen Querträger (3), Anbaubeschläge (4) zum Anbau des Querträgers (3) am Fahrzeug (10) und eine Montageeinheit (5) zur Montage der Zugkupplung (2) am Querträger (3) aufweist, wobei die Komponenten der Zugeinrichtung (1), Querträger (3), Anbaubeschläge (4), Montageeinheit (5) und Zugkupplung (2), schweißfrei, vorzugsweise durch Verschraubungen, miteinander verbindbar sind, wobei die Zugeinrichtung (1) eine Anbauschnittstelle (6) aufweist, die für einen variablen Anbau des Querträgers (3), insbesondere in unterschiedlichen axialen Drehstellungen, an den Anbaubeschlägen (4) vorgesehen und ausgebildet ist, und eine Montageschnittstelle (7) aufweist, **dadurch gekennzeichnet, dass** die Montageschnittstelle (7) für eine variable Montage der Zugkupplung (2) in unterschiedlichen Drehstellungen am Querträger (3) vorgesehen und ausgebildet ist, wobei dadurch die Montageposition der Zugkupplung (2) am Querträger (3) bedarfsweise variiert werden kann und wobei die Montageeinheit (5) für eine wahlweise Montage der Zugkupplung (2) in verschiedenen Ausrichtungen und Einbaulagen am Querträger (3), nämlich für eine wahlweise Montage der Zugkupplung (2) auf Höhe und in Zugrichtung (9) hinter dem Querträger (3) oder unter dem Querträger (3), ausgebildet ist, wobei die Zugkupplung (2) eine einfach oder mehrfach abgewinkelte Kupplungsstange (11), nämlich eine Kugelstange, mit einem Kupplungskopf (12), nämlich einem Kugelkopf, aufweist und wobei
die Zugeinrichtung (1) als variables Baukastensystem (9) mit unterschiedlichen Zugkupplungen (2), Querträgern (3), Anbaubeschlägen (4) und Montageeinheiten (5) ausgebildet ist.

2. Zugeinrichtung nach Anspruch 1 Anbauschnittstelle (6) von einer Stirnplatte (19) am Querträger (3) und rotationssymmetrisch verteilten Befestigungen (20), insbesondere Verschraubungen, an der Stirnplatte (19) und dem Anbaubeschlag (4) gebildet ist.

3. Zugeinrichtung nach Anspruch 1 oder 2, **dadurch gekennzeichnet, dass** die Montageschnittstelle (7) von einer Montagestelle (21), insbesondere einer Schraubstelle, am Querträger (3) und von einer schalenförmig den Querträger (3) umgreifenden Montageeinheit (5) gebildet ist.

4. Zugeinrichtung nach einem der vorhergehenden Ansprüche, **dadurch gekennzeichnet, dass** die Montageeinheit (5) eine am Querträger (3) befestigbare Stützeinheit (29) und einen hieran bedarfsweise verstellbar angeordneten Montagekopf (32) für die Zugkupplung (2) aufweist.

5. Zugeinrichtung nach Anspruch 4, **dadurch gekennzeichnet, dass** der Montagekopf (32) als verstellbarer Klemmkäfig (33) oder als Flanschkopf (41) ausgebildet ist.

6. Zugeinrichtung nach Anspruch 5, **dadurch gekennzeichnet, dass** der Klemmkäfig (33) mehrere, insbesondere zwei, längs des Querträgers (3) an die Zugkupplung (2) anstellbare und dort fixierbare Klemmbacken (34) aufweist.

7. Zugeinrichtung nach Anspruch 6, **dadurch gekennzeichnet, dass** die Klemmbacken (34) des Klemmkäfigs (33) zur Lageeinstellung, insbesondere der Höhenlage, der Zugkupplung (2) einsetzbar sind.

8. Zugeinrichtung nach einem der vorhergehenden Ansprüche, **dadurch gekennzeichnet, dass** die Zugkupplung (2) eine feste oder bewegliche, insbesondere abnehmbare Kupplungsstange (11) aufweist.

9. Zugeinrichtung nach einem der vorhergehenden Ansprüche, **dadurch gekennzeichnet, dass** der Anbaubeschlag (4) eine bevorzug plattenartige, abgewinkelte Form aufweist, deren Arme (25,26) Montagestellen (27,28) zur Verbindung mit dem Querträger (3) und dem Fahrzeug (10), insbesondere dem Fahrzeugchassis, aufweist.

10. Fahrzeug, insbesondere Straßenfahrzeug, mit einer Zugeinrichtung (1), die eine Zugkupplung (2), einen Querträger (3), Anbaubeschläge (4) zum Anbau des Querträgers (3) am Fahrzeug (10) und eine Montageeinheit (5) zur Montage der Zugkupplung (2) am Querträger (3) aufweist, **dadurch gekennzeichnet, dass** die Zugeinrichtung (1) nach mindestens einem der Ansprüche 1 bis 9 ausgebildet ist.

11. Fahrzeug nach Anspruch 10, **dadurch gekennzeichnet, dass** das Fahrzeug (10) als Kraftfahrzeug, insbesondere als Nutzfahrzeug oder Wohnmobil, ausgebildet ist.

12. Fahrzeug nach Anspruch 10 oder 11, **dadurch gekennzeichnet, dass** das Fahrzeug (10) einen motorisierten Zugkopf mit Frontantrieb und ein Anbauchassis aufweist.

## Claims

1. Towing device for a vehicle (10), in particular a road vehicle, wherein the towing device (1) has a towing hitch (2), a cross member (3), attachment fittings (4) for attaching the cross member (3) to the vehicle (10) and a mounting unit (5) for mounting the towing hitch (2) on the cross member (3), wherein the components of the towing device (1), cross member (3), attachment fittings (4), mounting unit (5) and towing hitch (2) are able to be connected together without welding, preferably by screw connections, wherein the towing device (1) has an attachment interface (6) that is provided and configured for variable attachment of the cross member (3), in particular in different axial rotational positions, to the attachment fittings (4), and has a mounting interface (7), **characterized in that** the mounting interface (7) is provided and configured for variable mounting of the towing hitch (2) in different rotational positions on the cross member (3), wherein, as a result, the mounting position of the towing hitch (2) on the cross member (3) can be varied as required, and wherein the mounting unit (5) is configured for selective mounting of the towing hitch (2) in different orientations and installation positions on the cross member (3), in particular for selective mounting of the towing hitch (2) at the height of and in the towing direction (9) behind the cross member (3) or under the cross member (3), wherein the towing hitch (2) has a singly or multiply angled drawbar (11), namely a knee-joint bar, with a hitch head (12), namely a ball head, and wherein
the towing device (1) is configured as a variable modular system (9) with different towing hitches (2), cross members (3), attachment fittings (4) and mounting units (5) .

2. Towing device according to Claim 1, the attachment interface (6) being formed by an end plate (19) on the cross member (3) and fastening means (20), in particular screw connections, distributed in a rotationally symmetric manner, on the end plate (19) and the attachment fitting (4).

3. Towing device according to Claim 1 or 2, **characterized in that** the mounting interface (7) is formed by a mounting point (21), in particular a screwing point, on the cross member (3) and by a mounting unit (5) engaging around the cross member (3) in a shell-like manner.

4. Towing device according to one of the preceding claims, **characterized in that** the mounting unit (5) has a supporting unit (29) that is able to be fastened to the cross member (3), and a mounting head (32), arranged thereon so as to be adjustable as required, for the towing hitch (2).

5. Towing device according to Claim 4, **characterized in that** the mounting head (32) is in the form of an adjustable clamping cage (33) or of a flange head (41).

6. Towing device according to Claim 5, **characterized in that** the clamping cage (33) has a plurality of, in particular two, clamping jaws (34) that are able to be positioned against the towing hitch (2) along the cross member (3) and are able to be fixed there.

7. Towing device according to Claim 6, **characterized in that** the clamping jaws (34) of the clamping cage (33) are able to be used for position setting, in particular in terms of height, of the towing hitch (2).

8. Towing device according to one of the preceding claims, **characterized in that** the towing hitch (2) has a fixed or movable, in particular removable drawbar (11).

9. Towing device according to one of the preceding claims, **characterized in that** the attachment fitting (4) has a preferably plate-like, angled shape, the arms (25, 26) of which have mounting points (27, 28) for connecting to the cross member (3) and the vehicle (10), in particular the vehicle chassis.

10. Vehicle, in particular road vehicle, having a towing device (1) that has a towing hitch (2), a cross member (3), attachment fittings (4) for attaching the cross member (3) to the vehicle (10) and a mounting unit (5) for mounting the towing hitch (2) on the cross member (3), **characterized in that** the towing device (1) is configured in accordance with at least one of Claims 1 to 9.

11. Vehicle according to Claim 10, **characterized in that** the vehicle (10) is configured as a motor vehicle, in particular as a commercial vehicle or camper van.

12. Vehicle according to Claim 10 or 11, **characterized in that** the vehicle (10) has a motorized traction head with front-wheel drive and an attachable chassis.

## Revendications

1. Dispositif de traction destiné à un véhicule (10), notamment un véhicule routier, le dispositif de traction (1) comportant un accouplement de traction (2), une traverse (3), des ferrures de fixation (4) destinées à fixer la traverse (3) au véhicule (10) et une unité de montage (5) destinée à monter l'accouplement de traction (2) sur la traverse (3), les composants du dispositif de traction (1), notamment la traverse (3), les ferrures de montage (4), l'unité de montage (5) et l'accouplement de traction (2) pouvant être reliés entre eux sans soudure, de préférence par vissage, le dispositif de traction (1) comportant une interface de fixation (6) qui est prévue et conçue pour fixer de manière variable la traverse (3), en particulier dans différentes positions de rotation axiales, sur les ferrures de fixation (4), et comportant un interface de montage (7), **caractérisé en ce que** l'interface de montage (7) est prévue et conçue pour monter de manière variable l'accouplement de traction (2) dans différentes positions de rotation sur la traverse (3), la position de montage de l'accouplement de traction (2) sur la traverse (3) pouvant être modifiée selon les besoins et l'unité de montage (5) étant conçue pour monter au choix l'accouplement de traction (2) dans différentes orientations et positions de montage sur la traverse (3), c'est-à-dire pour monter au choix l'accouplement de traction (2) en hauteur et derrière la traverse (3) ou sous la traverse (3) par référence au sens de traction (9), l'accouplement de traction (2) comportant une barre d'accouplement (11) coudée une ou plusieurs fois, notamment une barre à rotule, et pourvue d'une tête d'accouplement (12), notamment d'une rotule, et le dispositif de traction (1) étant conçu comme un système modulaire variable (9) pourvu de différents accouplements de traction (2), différentes traverses (3), différentes ferrures de montage (4) et différentes unités de montage (5).

2. Dispositif de traction selon la revendication 1, l'interface de fixation (6) étant formée d'une plaque frontale (19) sur la traverse (3) et de fixations (20) réparties à symétrie de révolution, en particulier de liaisons vissées, sur la plaque frontale (19) et la ferrure de montage (4).

3. Dispositif de traction selon la revendication 1 ou 2, **caractérisé en ce que** l'interface de montage (7) est formée d'un point de montage (21), notamment un point de vissage, sur la traverse (3) et d'une unité de montage (5) s'engageant en forme de coque autour de la traverse (3).

4. Dispositif de traction selon l'une des revendications précédentes, **caractérisé en ce que** l'unité de montage (5) comporte une unité de support (29) qui peut être fixée à la traverse (3) et une tête de montage (32) qui est destinée à un accouplement de traction (2) et qui est disposée sur celle-ci de manière réglable selon les besoins.

5. Dispositif de traction selon la revendication 4, **caractérisé en ce que** la tête de montage (32) est réalisée sous la forme d'une cage de serrage réglable (33) ou d'une tête de bride (41).

6. Dispositif de traction selon la revendication 5, **caractérisé en ce que** la cage de serrage (33) comporte plusieurs, notamment deux, mâchoires de serrage (34) réglables le long de la traverse (3) sur l'accouplement de traction (2) et fixées à celui-ci.

7. Dispositif de traction selon la revendication 6, **caractérisé en ce que** les mâchoires de serrage (34) de la cage de serrage (33) peuvent être utilisées pour régler la position, en particulier la hauteur, de l'accouplement de traction (2).

8. Dispositif de traction selon l'une des revendications précédentes, **caractérisé en ce que** l'accouplement de traction (2) comporte une barre d'accouplement (11) fixe ou mobile, en particulier amovible.

9. Dispositif de traction selon l'une des revendications précédentes, **caractérisé en ce que** la ferrure de fixation (4) a une forme coudée, de préférence de type plaque, dont les bras (25, 26) comportent des points de montage (27, 28) destinés à être reliés à la traverse (3) et au véhicule (10), en particulier au châssis du véhicule.

10. Véhicule, en particulier véhicule routier, comprenant un dispositif de traction (1) qui comporte un accouplement de traction (2), une traverse (3), des ferrures de fixation (4) destinées à fixer la traverse (3) au véhicule (10) et une unité de montage (5) destinée à monter l'accouplement de traction (2) sur la traverse (3), **caractérisé en ce que** le dispositif de traction (1) est conçu selon l'une au moins des revendications 1 à 9.

11. Véhicule selon la revendication 10, **caractérisé en ce que** le véhicule (10) est conçu comme un véhicule automobile, notamment comme un véhicule utilitaire ou une autocaravane.

12. Véhicule selon la revendication 10 ou 11, **caractérisé en ce que** le véhicule (10) comporte une tête de traction motorisée à traction avant et un châssis de fixation.
